# FASCICULE DE BREVET EUROPEEN

(11) **EP 0 698 983 B1**
(45) Date de publication et mention de la délivrance du brevet: **24.09.2003**
(21) Numéro de dépôt: 95112659.8
(22) Date de dépôt: 11.08.1995
(51) Int. Cl.: H04M 1/26, G04G 1/00

(54) **Radiotéléphone intégré dans une montre bracelet dont la couronne permet la composition d'un numéro d'appel**
Armbanduhr mit Funksprechanlage wobei die Krone zur Rufnummerwahl verwendet wird
Radiotelephone wristwatch of which the hand-operating knob is used to dial a call number

(30) Priorité: 23.08.1994 FR 9410205
(43) Date de publication de la demande: 28.02.1996
(73) Titulaire: ETA SA Manufacture Horlogère Suisse, 2540 Grenchen (CH)
(72) Inventeur: Kalbermatter, Stefan, CH-2540 Grenchen (CH); Meister, Pierre-André, CH-2502 Bienne (CH)
(74) Mandataire: Patry, Didier Marcel Pierre

(56) Documents cités:
- EP-A- 0 569 868
- US-A- 4 726 687
- US-A- 4 847 818
- US-A- 5 239 521
- PATENT ABSTRACTS OF JAPAN vol. 11 no. 236 (P-601) ,4 Août 1987 & JP-A-62 047572 (CASIO COMPUT CO LTD)
- PATENT ABSTRACTS OF JAPAN vol. 7 no. 6 (P-167) ,11 Janvier 1983 & JP-A-57 163890 (SHARP K.K.)

## Description

La présente invention est relative à un téléphone portatif sans fil comportant une unité principale de petit volume, un microphone et un écouteur reliés à ladite unité principale, cette dernière comprenant des moyens de composition d'un numéro d'appel.

Un téléphone portatif sans fil comporte généralement un combiné tenu à la main et appliqué contre l'oreille. Il comprend un écouteur et un microphone séparés par une zone incluant l'unité principale dans laquelle on trouve les moyens de composition d'un numéro d'appel, généralement un clavier à touches. Ce combiné est lourd et encombrant, surtout s'il s'agit d'un téléphone à longue distance couvrant une région ou un pays entier. Si l'on désire réduire les dimensions du téléphone, au point par exemple de permettre son port quasi permanent sur le corps humain en laissant les mains libres, on sera amené à réduire corollairement l'unité principale et donc le champ réservé au clavier à touches.

Le brevet US 5,239,521 décrit un téléphone portable dont les dimensions et la forme sont celles d'une montre bracelet. Ce téléphone peut être porté au poignet de l'utilisateur. Cependant, ce téléphone portable présente l'inconvénient d'avoir des touches de petites dimensions pour la numérotation d'un numéro de téléphone. En effet, ces touches ainsi que les chiffres et signes qui y sont apposés sont peu visibles et peu ergonomiques, les dimensions des doigts qui doivent les actionner étant beaucoup plus importantes que la dimension d'une touche. Un tel clavier miniature devrait donc être manipulé au moyen d'un outil ressemblant à une tige de faible diamètre si l'on veut éviter d'actionner plusieurs touches à la fois, ce qui aboutirait à des erreurs de composition du numéro d'appel. L'utilisation d'un tel outil n'est pas souhaitable pour des raisons évidentes de disponibilité immédiate et de perte de temps.

Pour pallier les inconvénients cités ci-dessus, le téléphone selon l'invention est doté de moyens de composition du numéro d'appel comportant au moins un système d'affichage dans lequel au moins les chiffres de 0 à 9 composant ce numéro d'appel peuvent être mis en évidence les uns après les autres par la manipulation d'une couronne du type horloger, ladite couronne étant susceptible d'être mise en rotation puis pressée pour, respectivement, choisir un chiffre composant ledit numéro, puis confirmer ledit chiffre et ainsi de suite jusqu'à ce que ledit numéro soit entièrement composé.

Un exemple de l'utilisation d'une tige-couronne de montre pour saisir des données est notamment décrit dans le brevet US 4,726,687.

Les caractéristiques et avantages de l'invention apparaîtront à la lecture de la description de plusieurs modes particuliers d'exécution de la présente invention. La description qui suit est faite en référence au dessin annexé qui est donné uniquement à titre d'exemple et qui comporte les figures suivantes :
- la figure 1 est une vue en plan du téléphone selon l'invention et selon un premier mode d'exécution réalisé dans son acception la plus simple,
- la figure 2 est un tableau ou organigramme expliquant les diverses manipulations à appliquer à la couronne pour composer le numéro de téléphone de l'appareil montré en figure 1,
- la figure 3 est un schéma électrique général des circuits composant le téléphone de la figure 1,
- la figure 4 est une vue en plan du téléphone selon l'invention et selon un deuxième mode d'exécution réalisé dans son acception la plus complète,
- la figure 5 est une vue en plan du mécanisme de couronne équipant le téléphone selon l'invention, complétés ici pour certains besoins téléphoniques, par les signes étoile *64 et dièse #65. Le cadran 63 est surmonté d'une seule aiguille 70 qui est actionnée par un moteur pas à pas interne à l'unité 1. Ce moteur est commandé par la rotation 60 de la couronne 10 pour amener l'aiguille 70 sur le chiffre 13 choisi (ici le chiffre.3). Ceci étant
- la figure 6 est un tableau ou organigramme expliquant les diverses manipulations à appliquer à la couronne pour composer le numéro de téléphone de l'appareil montré en figure 4, et
- la figure 7 est un schéma électrique général des circuits composant le téléphone de la figure 4.

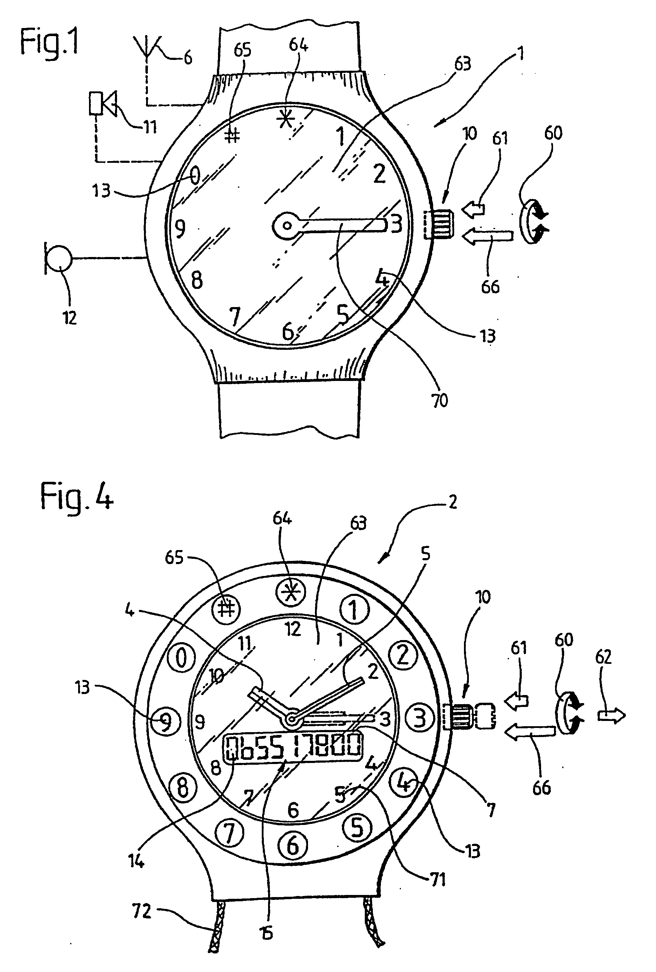

Le téléphone portatif sans fil de la figure 1 comporte une unité principale 1 de petit volume. On veut exprimer par là le fait que l'unité 1 est de l'ordre de grandeur par exemple d'une montre portée au poignet et attachée au moyen d'un bracelet. A cette unité 1 sont reliés une antenne 6, un écouteur 11 et un microphone 12. L'antenne 6 peut faire partie intégrante du bracelet comme le microphone 12. L'écouteur 11 peut être incorporé à l'unité 1 et être par exemple du type piézo-électrique. Cette unité 1 comprend des moyens de composition d'un numéro d'appel. Dans le premier mode d'exécution figuré à la figure 1, ces moyens de composition comportent au moins un système d'affichage dans lequel au moins les chiffres 0 à 9, référencés 13, peuvent être mis en évidence les uns après les autres par la manipulation d'une couronne 10 de type horloger. Quand la couronne 10 est entraînée en rotation (60), il est possible de choisir un des chiffres 13. Lorsqu'un de ces chiffres est choisi, on exerce une pression 61 sur ladite couronne pour confirmer le chiffre choisi. A partir de là, une nouvelle rotation de la couronne 10 permet de choisir un chiffre suivant que l'on confirmera à nouveau en pressant sur la couronne 10. Cet exercice est répété jusqu'à ce que le numéro de téléphone soit entièrement composé.

Dans le cas du premier mode d'exécution montré en figure 1, le système d'affichage comporte un cadran 63 sur lequel apparaissent au moins les chiffres 0 à 9, réalisé, une pression 61 exercée sur la couronne 10 permet de confirmer le chiffre choisi.

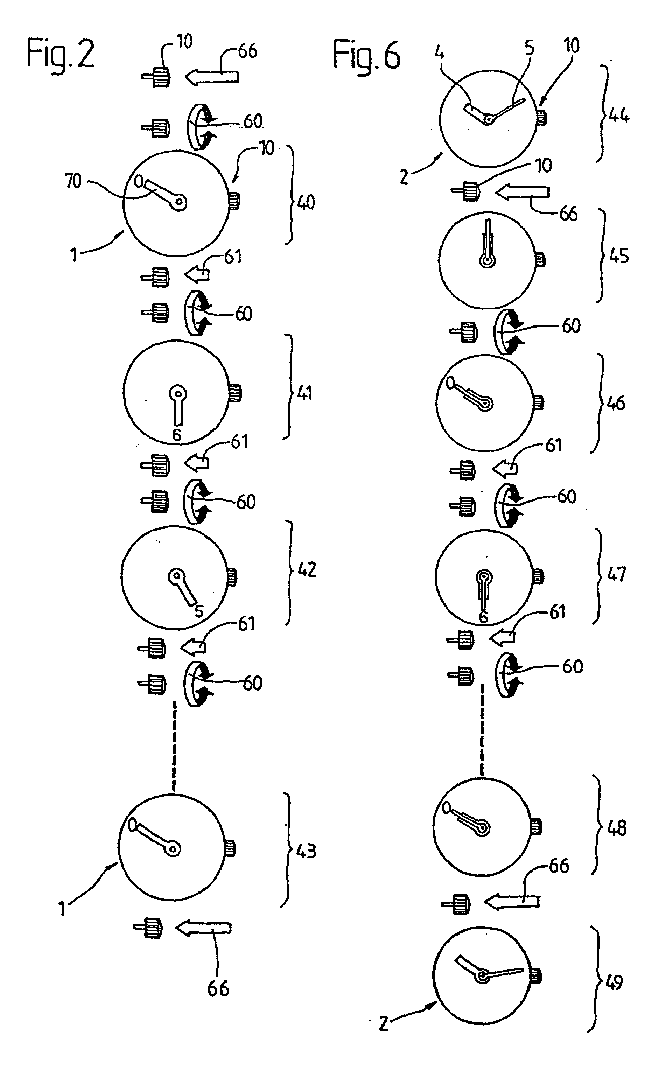

L'organigramme ou tableau de la figure 2 explique les diverses manipulations à appliquer à la couronne 10 pour composer le numéro de téléphone. Au début, une pression de longue durée 66 sur la couronne 10 permet d'entrer en ligne et d'obtenir le signal musical de confirmation de cette entrée. En tournant la couronne 10, on positionne l'aiguille 70 sur le premier chiffre 0 du numéro à composer, chiffre 0 qu'on confirme par une pression courte 61 exercée sur la couronne 10. Il s'agit de l'étape référencée 40 sur la figure 2. En exerçant une nouvelle rotation 60 sur la couronne 10, on choisit le chiffre 6 (étape référencée 41) qu'on confirme à nouveau par une pression 61 sur la couronne 10. En étape 42, on choisit et confirme le chiffre 5. On répète ces opérations jusqu'à ce que le numéro d'appel, par exemple 065 51 78 00, soit entièrement composé. Quand le dernier chiffre 0 (étape 43) a été confirmé, le correspondant est appelé puis la conversation peut s'établir. En fin de liaison, on coupe la ligne en exerçant une pression longue 66 sur la couronne 10.

En variante de ce qui a été dit ci-dessus, la première pression longue 66 précédant l'étape 40 peut provoquer la mise en mémoire de l'entier du numéro de téléphone après quoi ce numéro est envoyé sur la ligne lors de la seconde pression longue 66 succédant à l'étape 43. Dans ce cas, une fois la conversation terminée une troisième pression longue est nécessaire pour couper la ligne.

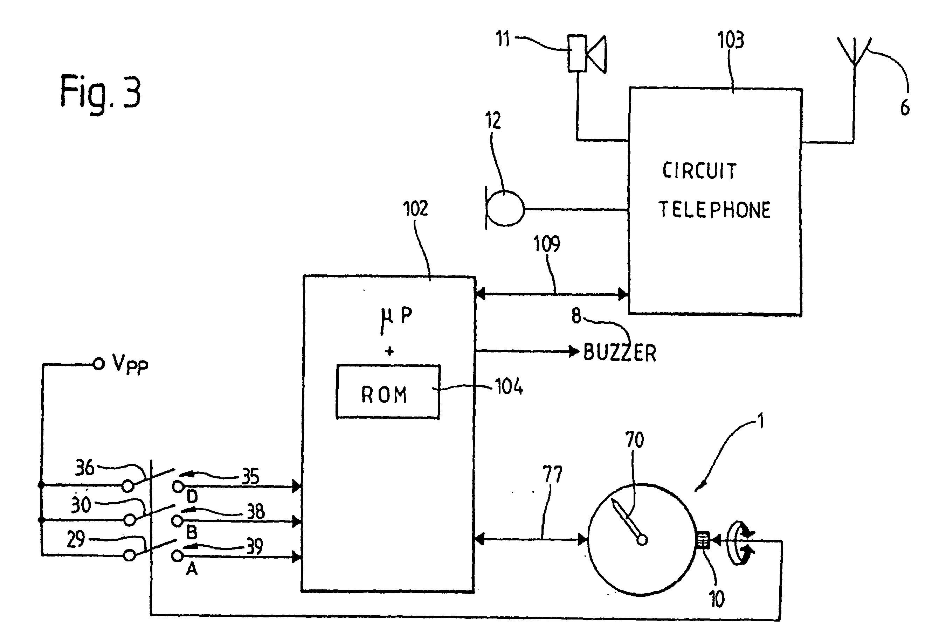

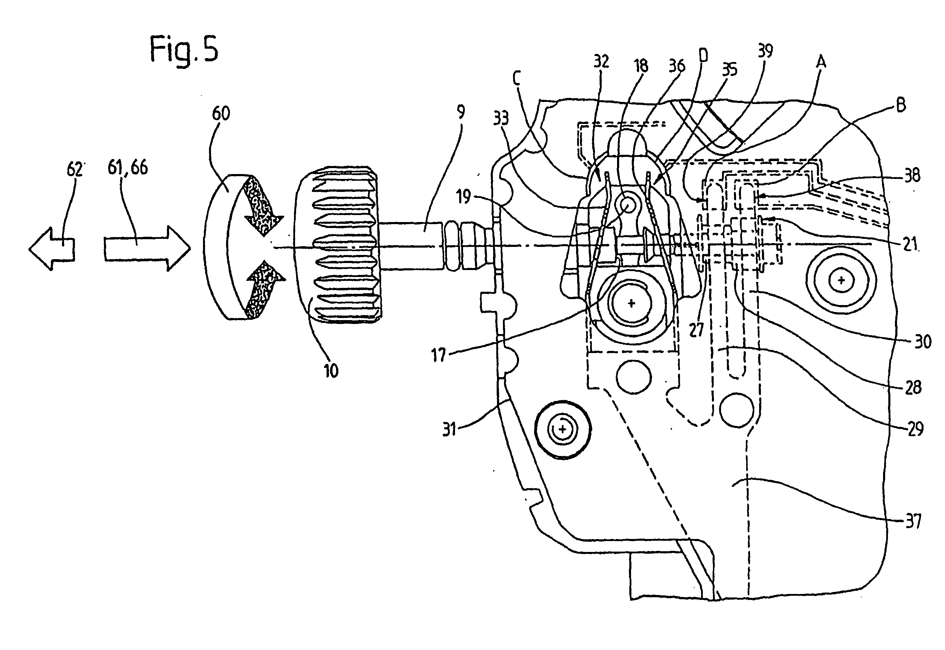

Le circuit composant le téléphone de la figure 1 est illustrée en figure 3. Il comporte essentiellement un circuit de téléphone 103 (par exemple celui commercialisé par la société Philips) auquel sont attachés l'antenne 6, le microphone 12 et l'écouteur 11 et un microprocesseur µP102 choisi parmi ceux se trouvant sur le marché. Ce microprocesseur, doté d'une mémoire ROM 104, gère les informations provenant de la couronne 10, ces informations étant générées par des interrupteurs 35, 38 et 39 commandés par la couronne 10. Le moteur pas à pas entraînant l'aiguille 70 de l'unité principale 1 est relié au microprocesseur 102 au moyen du bus 77. Enfin un buzzer 8 ou alarme sonore est relié au même microprocesseur 102. Comme on le verra plus en détail lorsque sera discutée la figure 5, quand la couronne 10 est entraînée en rotation des lames conductrices élastiques 29 et 30, formant respectivement les interrupteurs 39 et 38, entrent alternativement en contact avec des pistes conductrices respectivement désignées par A et B, ce qui a pour but de faire progresser l'aiguille 70 d'un chiffre à l'autre se trouvant sur le cadran de l'unité 1. En outre, quand la couronne est pressée, c'est l'interrupteur 35 qui se ferme, mettant en contact la lame élastique 36 et la piste conductrice D, ce qui permet de confirmer le chiffre choisi. Une rotation de la couronne permettant la correction pas à pas d'une aiguille et les moyens mis en oeuvre pour parvenir à ce résultat sont décrits dans le document CH-A-643 427 (US-A-4 398 831).

Le mécanisme de couronne est semblable à celui décrit à propos de la figure 5 illustrant le deuxième mode d'exécution de l'invention. Le lecteur voudra bien s'y référer. A remarquer cependant que, dans le premier mode d'exécution, le tirage de la tige selon figure 5 et flèche 62 n'existe pas et donc que n'existe pas non plus la lame 33 et la piste C.

La figure 4 est une vue en plan du téléphone selon l'invention et selon un deuxième mode d'exécution plus complet que celui présenté en figure 1. En figure 4, le cadran porte douze indications, c'est-à-dire les signes *64 et #65 en plus des chiffres 0 à 9. Le cadran 63 est surmonté de deux aiguilles 4 et 5 entraînées chacune par un moteur pas à pas à deux sens de rotation. Ici, le téléphone inclut un garde-temps utilisant aussi le cadran 63 et les aiguilles 4 et 5 pour afficher l'heure. Les index 13 permettent de composer le numéro de téléphone et les index 71 sont réservés à l'affichage de l'heure.

La couronne 10 peut être disposée selon trois positions axiales : la première, pressée et instable pour les besoins notamment de confirmation du chiffre choisi en mode téléphone, la seconde, neutre et stable pour le choix dudit chiffre et la troisième, tirée et stable pour permettre la mise à l'heure du garde-temps. A l'unité principale 2 sont reliés microphone, écouteur et antenne selon un mode qui n'a pas été précisé, car beaucoup de solutions sont envisageables. L'unité 2 peut être attachée autour du cou au moyen d'un collier, cette unité revêtant par exemple, les dimensions d'un chronographe utilisé pour chronométrer les événements sportifs.

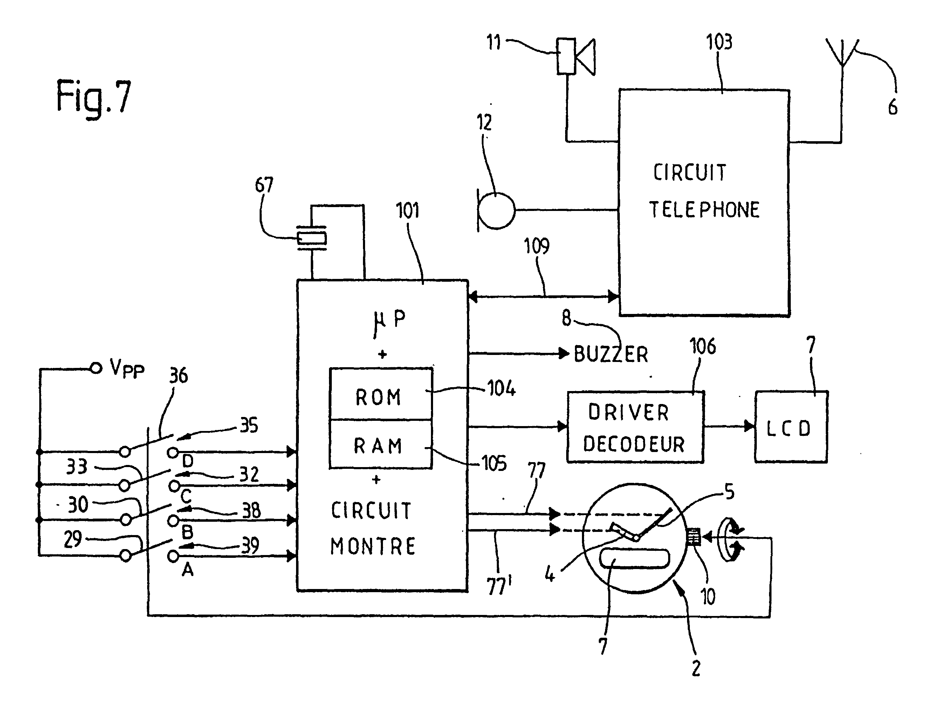

La marche à suivre pour passer du mode garde-temps au mode téléphone, la façon de s'y prendre pour composer le numéro de téléphone, puis de revenir au mode garde-temps va être expliquée en se référant à l'organigramme de la figure 6.

Quand le téléphone n'est pas utilisé, l'appareil 2 indique l'heure (aiguille 4) et la minute (aiguille 5), la mise à l'heure s'opérant à couronne 10 tirée (voir étape 44). Une pression longue 66 exercée sur la couronne 10 fait entrer l'appareil en mode téléphone, ce qui a pour résultat la superposition, par exemple à midi, des aiguilles 4 et 5 (étape 45). Dès cet instant, si l'on imprime à la couronne 10 un mouvement de rotation, on peut amener les aiguilles superposées sur le premier chiffre 0 composant le numéro de téléphone (étape 46). On confirme ce chiffre par un appui 61 de courte durée sur la couronne 10. En exerçant une nouvelle rotation 60 sur la couronne, on choisit le second chiffre 6 (étape 47) qu'on confirme à nouveau par une pression 61 sur la couronne, cette pression étant suivie d'une rotation 60 pour choisir le prochain chiffre. On répète ces opérations jusqu'à ce que le numéro d'appel, par exemple 065 51 78 00, soit entièrement composé. Quand le dernier chiffre 0 (étape 48) a été confirmé, le signal d'appel retentit chez le correspondant. En fin de conversation, on coupe la ligne en exerçant une pression longue 66 sur la couronne, cette action provoquant sur l'appareil 2 le retour de l'affichage de l'heure (étape 49).

Les remarques faites lors de la description du premier mode d'exécution et relatives aux systèmes de téléphone à courte ou à longue distance sont également applicables à ce deuxième mode d'exécution.

Le mécanisme de couronne 10 est illustré en figure 5. Il s'agit de l'une des figures reprise de la série montrée dans le document EP-A-0 569 868 auquel on pourra se référer si des détails de construction sont souhaités. On rappellera cependant ici brièvement le fonctionnement de ce mécanisme.

Sur la couronne 10 chapeautant une tige 9 peut s'exercer, soit un mouvement de rotation 60, soit une pression 61, 66, soit encore une extraction 62. Un pignon coulant 21 comporte deux étages 27 et 28 décalés angulairement l'un par rapport à l'autre d'environ 45°. Des lames conductrices 29 et 30 appuient respectivement sur les étages 27 et 28 de telle sorte que lorsque le pignon coulant 21 est entraîné en rotation par la tige, ces lames 29 et 30 entrent alternativement en contact avec des pistes conductrices désignées par A et B, ces lames et pistes formant respectivement des interrupteurs 39 et 38 et ces pistes étant gravées sur un circuit imprimé 31. La figure 5 montre encore que le mécanisme de couronne comporte deux autres interrupteurs. Un premier interrupteur 32 est formé par une lame conductrice 33 susceptible d'entrer en contact avec une piste conductrice C formée sur le circuit imprimé 31 quand la couronne est tirée selon la flèche 62. Un second interrupteur 35 est formé par une lame conductrice 36 susceptible d'entrer en contact avec une piste conductrice D également formée sur le circuit imprimé 31 quand la couronne est pressée selon les flèches 61 et 66. Une bascule 18 sur laquelle est ménagé un pion 19 coopère avec une gorge 17 de la tige 9 pour entraîner respectivement les lames C ou D. Les lames 29, 30, 33 et 36 sont un seul et même élément ayant une base commune 37. Ces lames sont découpées dans une feuille métallique, puis pliées à l'équerre en ce qui concerne les lames 33 et 36. Les quatre lames se trouvent connectées à un même potentiel électrique, soit Vpp comme cela est apparent dans le schéma de la figure 7.

Les interrupteurs 35, 32, 38 et 39 décrits ci-dessus sont reportés schématiquement sur le schéma de la figure 7 qui illustre l'arrangement électrique de la montre-téléphone du deuxième mode d'exécution de l'invention. Ces interrupteurs pilotent un microprocesseur 101 qui porte en son sein une mémoire ROM 104, une mémoire RAM 105 et un circuit montre. Le microprocesseur 101 porte une base de temps 67 et est relié par un bus 109 à un circuit téléphone 103. Ce dernier, qui peut être du type commercialisé par la société Philips, (marque déposée), communique avec le monde extérieur par son antenne 6 et avec l'utilisateur par le microphone 12 et l'écouteur 11. Le microprocesseur commande par les bus 77 et 77' respectivement, les moteurs bidirectionnels qui entraînent les aiguilles 4 et 5.

On entre en mode mise à l'heure de la montre en tirant la couronne 10 ce qui a pour effet de fermer l'interrupteur 32. La mise à l'heure proprement dite est réalisée en tournant la couronne, ce qui a pour effet d'entraîner alternativement les interrupteurs 38 et 39. Une rotation de la couronne à une vitesse angulaire inférieure à une vitesse déterminée permet la correction pas à pas, en plus ou en moins de l'indication des minutes selon le sens de rotation de la couronne, alors qu'une rotation de la couronne à une vitesse supérieure à ladite vitesse déterminée permet la correction rapide, en plus ou en moins, de l'indication des heures par fuseaux horaires entiers selon le sens de rotation de la couronne. Les moyens mis en oeuvre pour ces corrections sont décrits en détail dans le document CH-A-643 427 (US-A-4 398 831), ces moyens étant repris dans ce deuxième mode d'exécution de la présente invention.

La composition du numéro de téléphone se fait en position neutre de la couronne 10 et en exerçant sur elle, comme mentionné plus haut, des mouvements de rotation 60 et de pression 61, 66 selon le processus explicité plus haut et illustré en figure 6. Pour cela le microprocesseur 101 de la figure 7 est équipé d'une mémoire ROM 104 qui gère les informations en provenance de la couronne 10. La mémoire RAM 105 a pour fonction principale de garder en mémoire l'heure du jour et de la restituer quand on passe du mode téléphone au mode garde-temps. Dans le cas où le téléphone doit stocker le numéro de téléphone complet avant de l'envoyer, cette mémoire RAM a aussi pour but d'emmagasiner ce numéro. Le microprocesseur 101 comporte encore un circuit montre destiné à afficher l'heure du jour. Ce circuit, par exemple du type H 5026 de la société EM Microélectronic-Marin -Marin SA (marque déposée), comporte un diviseur de fréquence et un driver qui attaque par les lignes 77 et 77' deux moteurs pas à pas à deux sens de rotation. Comment, à partir d'une pression sur la couronne, les aiguilles 4 et 5 viennent en superposition, puis se déplacent ensuite ensemble, a déjà été expliqué dans le document EP-A-0 589 353. Le lecteur intéressé par cette technique voudra donc bien se reporter à cette publication.

Les figures 4 et 7 montrent qu'il est possible d'adjoindre à la montre du deuxième mode d'exécution un affichage supplémentaire comportant une cellule à cristal liquide 7. Cette cellule est alimentée selon la figure 7 par un driver décodeur 106 recevant ses informations du microprocesseur 101. Cet affichage supplémentaire est doté d'une pluralité de chiffres 14 faisant apparaître le numéro de téléphone complet 15, les chiffres 14 apparaissant au fur et à mesure qu'ils sont confirmés par une pression sur la couronne 10 (figure 4).

Les modes d'exécution de l'invention décrits ci-dessus ont montré avec quelle facilité il est possible de composer un numéro de téléphone avec une couronne issue de la technique connue en horlogerie. Cette manière de faire est ergonomique pour une unité de petit volume dans laquelle les touches de composition classiques sont difficile d'utilisation.

## Revendications

1. Téléphone portatif sans fil comportant une unité principale (1,2,3) de petit volume, un microphone (12) et un écouteur (11) reliés à ladite unité principale, cette dernière comprenant des moyens (4,5,10,70,7,13,14) de composition d'un numéro d'appel (15) et au moins un système d'affichage dans lequel au moins les chiffres de 0 à 9 (13,14) composant le numéro d'appel (15) peuvent être mis en évidence les uns après les autres, **caractérisé par le fait que** le système d'affichage comporte un cadran (63) sur lequel sont inscrits au moins les chiffres 0 à 9 (13), que ce cadran est surmonté de deux aiguilles (4,5) entraînées chacune par un moteur pas à pas à deux sens de rotation, que le téléphone inclut un garde-temps utilisant ledit cadran et lesdites aiguilles également pour afficher l'heure, au moins un desdits moteurs étant commandé par la manipulation d'une couronne (10) du type horloger, ladite couronne étant susceptible d'être mise en rotation (60) et pressée (61) pour, respectivement, amener une desdites aiguilles (4,5) en regard du chiffre choisi (13,14) composant ledit numéro, puis confirmer ledit chiffre et ainsi de suite jusqu'à ce que ledit numéro soit entièrement composé.

2. Téléphone selon la revendication 1, **caractérisé par le fait que** des moyens sont mis en oeuvre pour qu'à une première pression longue (66) sur la couronne (10) les aiguilles (4,5) se superposent, qu'à une rotation (60) de la couronne les aiguilles réunies sont susceptibles de pointer sur le chiffre choisi (13) et qu'à une deuxième pression (61) sur la couronne le chiffre choisi est confirmé, ces opérations étant répétées jusqu'à ce que le numéro de téléphone soit entièrement composé, le retour à l'affichage de l'heure s'opérant en exerçant une seconde pression longue (66) sur la couronne.

3. Téléphone selon l'une quelconque des revendications précédentes, **caractérisé par le fait que** le cadran (63) comporte en outre une cellule à cristal liquide (7) où apparaissent les chiffres (14) composant le numéro de téléphone (15) au fur et à mesure de leur confirmation.

## Patentansprüche

1. Tragbares drahtloses Telefon mit einer Haupteinheit (1,2,3) mit kleinem Volumen, einem Mikrofon (12) und einem Hörer (11), der mit der Haupteinheit verbunden ist, wobei letzterer Mittel (4,5,10,70,7,13,14) zum Bilden einer zu wählenden Nummer (15) und wenigstens ein Anzeigesystem aufweist, in welchem wenigstens die Ziffern 0 bis 9 (13,14), die die zu wählende Nummer (15) bilden, nacheinander gezeigt werden können, **dadurch gekennzeichnet, daß** das Anzeigesystem ein Zifferblatt (63) aufweist, auf dem wenigstens die Ziffern 0 bis 9 (13) aufgebracht sind, das Zifferblatt von zwei Zeigern (4,5), von denen jeder von einem Schrittmotor mit zwei Drehrichtungen angetrieben ist, überragt wird, das Telefon einen Zeitmesser aufweist, der das Zifferblatt und die Zeiger gleichfalls zum Anzeigen der Zeit verwendet, wobei wenigstens einer der Motoren durch die Handhabung einer Krone (10) vom Zeitmesstyp gesteuert wird, wobei die Krone gedreht (60) und eingedrückt (61) werden kann, um einen der Zeiger (4,5) auf eine gewählte Ziffer (13,14), die die Nummer bildet, einzustellen, dann die Ziffer zu bestätigen, usw., bis die Nummer vollständig gebildet ist.

2. Telefon nach Anspruch 1, **dadurch gekennzeichnet, daß** die Mittel betrieben werden durch einen ersten langen Druck (66) auf die Krone (10), wobei die Zeiger (4,5) einander überlagern, eine Drehung (60) der Krone, wobei die vereinigten Zeiger in der Lage sind, auf die gewählte Ziffer (13) zu zeigen, und einen zweiten Druck (61) auf die Krone, wobei die ausgewählte Ziffer bestätigt wird, wobei diese Schritte wiederholt werden, bis die Telefonnummer vollständig gebildet ist, wobei die Rückkehr der Uhrzeiger durch Bewirken eines zweiten langen Drucks (66) auf die Krone erfolgt.

3. Telefon nach einem der vorhergehenden Ansprüche, **dadurch gekennzeichnet, daß** das Zifferblatt (63) ferner eine Flüssigkristallzelle (7) aufweist, auf der die Ziffern (14) erscheinen, die die Telefonnummer (15) je nach ihrer Bestätigung bilden.

## Claims

1. Portable wireless telephone including a principal unit (1, 2, 3) of small volume, a microphone (12) and an earpiece (11) coupled to said principal unit, such latter comprising means (4, 5, 10, 70, 7, 13, 14) for composing a number to be called (15), and at least one display system in which at least the digits from 0 to 9 (13, 14) making up the number to be called (15) can be displayed one after another, **characterized by** the fact that the display system includes a dial (63) on which appear at least the digits 0 to 9 (13), that such dial is surmounted by two hands (4, 5) each driven by a bidirectional stepping motor, that the telephone includes a timekeeper using said dial and said hands also in order to display the time, at least one of said motors being controlled by the manipulation of a crown (10) of the horological type, said crown being capable of being rotated (60) then pressed (61) in order respectively to bring one of said hands (4, 5) onto the chosen digit (13, 14) composing said number, then to confirm said digit and continuing thus until said number is entirely composed.

2. Telephone according to claim 1, **characterized by** the fact that means are put into operation in order that upon a first pressure (66) on the crown (10) the hands (4, 5) are superposed, that upon a rotation (60) of the crown the united hands are adapted to point to the chosen digit (13) and that upon a second pressure (61) on the crown the chosen digit is confirmed, such operations being repeated until the telephone number is entirely composed, the return to the display of time being effected by exerting a second, long pressure (66) on the crown.

3. Telephone according to any of the preceding claims, **characterized by** the fact that the dial (63) further includes a liquid crystal cell (7) in which the digits making up the telephone number (15) appear successively upon their confirmation.
